# EUROPÄISCHE PATENTSCHRIFT

(11) **EP 2 423 555 B1**
(45) Veröffentlichungstag und Bekanntmachung des Hinweises auf die Patenterteilung: **14.06.2017**
(21) Anmeldenummer: 11007296.4
(22) Anmeldetag: 18.02.2010
(51) Int. Cl.: F16K 31/54, F16L 25/01, F16L 35/00, F16L 37/098, F16L 37/36, F16L 37/56, H01R 13/639, H01R 13/64, F16K 31/528, F16L 37/12, F16L 37/373

(54) **Kupplungsanordnung**
Coupling assembly
Agencement de couplage

(30) Priorität: 14.03.2009 DE 202009003650 U
(43) Veröffentlichungstag der Anmeldung: 29.02.2012
(62) Teilanmeldung aus: 10707449.4
(73) Patentinhaber: H & B Electronic GmbH & Co. KG, 75392 Deckenpfronn (DE)
(72) Erfinder: Heimsch, Jochen, 70734 Fellbach (DE); Hölzle, Dieter, 75392 Deckenpfronn (DE); Weber, Wilfried, 72296 Schopfloch (DE)
(74) Vertreter: Wacker, Jost Oliver

(56) Entgegenhaltungen:
- EP-A2- 1 148 286
- WO-A1-2005/047052
- DE-A1-102004 033 567
- DE-B- 1 209 372
- DE-U1- 20 306 852
- US-A- 187 982
- US-A- 3 423 063
- US-A- 3 545 490
- US-A- 3 964 511
- US-A1- 2008 286 986

## Beschreibung

Die Erfindung betrifft eine Kupplungsanordnung zur lösbaren tropffreien Verbindung eines an einer ersten Einheit vorgesehenen ersten Leitungsabschnittes mit einem an einer zweiten Einheit vorgesehenen zweiten Leitungsabschnitt nach dem Oberbegriff des Anspruchs 1. Die Kupplungsanordnung sieht hierzu an der ersten Einheit anbringbare Verbindungsmittel und an der zweiten Einheit anbringbare Verbindungsgegenmittel vor, wobei die Verbindungsgegenmittel an den Verbindungsmitteln direkt oder indirekt festlegbar sind. Ferner weist die Kupplungsanordnung eine Stelleinrichtung auf, die zwischen dem ersten Leitungsabschnitt und dem zweiten Leitungsabschnitt positionierbar ist. Die Stelleinrichtung ist dabei zwischen einer Sperrstellung, in der die Verbindung zwischen dem ersten Leitungsabschnitt und dem zweiten Leitungsabschnitt gesperrt ist, und einer Fließstellung umschaltbar, in der die Verbindung zwischen dem ersten Leitungsabschnitt und dem zweiten Leitungsabschnitt geöffnet ist. Dabei weist die Stelleinrichtung einen translatorisch oder durch Rotation verstellbaren Stellkörper auf, der im verbundenen Zustand der Kupplungsanordnung in einem Abstand, das heißt in einer direkten Verbindung zwischen dem ersten Leitungsabschnitt und dem zweiten Leitungsabschnitt positioniert ist. In diesen Stellkörper ist ein Leitungszwischenabschnitt eingelassen, über den der erste Leitungsabschnitt mit dem zweiten Leitungsabschnitt in der Fließstellung verbindbar ist. Dabei ist der Stellkörper zwischen der Sperrstellung und der Fließstellung drehbar gelagert. Der Leitungszwischenabschnitt bildet dadurch eine bewegliche Verbindungsleitung zwischen den Leitungsabschnitten, deren Querschnitt vollständig innerhalb des Stellkörpers ausgebildet ist. Durch diese vollständige Ausbildung des Leitungszwischenabschnittes im Stellkörper und dessen Anordnung in direkter Verbindungslinie beider Leitungsabschnitte ist es möglich, durch eine geringfügige Relativbewegung des Stellkörpers gegenüber den Leitungsabschnitten deren Verbindung herzustellen beziehungsweise vollständig zu trennen. Dabei kann der Leitungszwischenabschnitt in der Fließstellung in eine gemeinsame Flucht zumindest mit einem jeweiligen Endabschnitt der beiden Leitungsabschnitte verbracht werden, wodurch eine sehr geradlinige Verbindung der Leitungsabschnitte über den Leitungszwischenabschnitt möglich ist, die nur sehr geringe Strömungsverluste verursacht. Durch den drehbar gelagerten Stellkörper kann die Kupplungsanordnung zudem insgesamt relativ kompakt ausgeführt werden. Dabei weist der Stellkörper einen ersten Teilkörper, der an einem dem ersten Leitungsabschnitt zugeordneten ersten Steckerelement geführt ist, und einen zweiten Teilkörper, der an einem dem zweiten Leitungsabschnitt zugeordneten zweiten Steckerelement geführt ist, auf, die aneinander anlegbar sind.

US 3,964,511 beschreibt eine Kupplungsanordnung mit zwei Verbindungsteilen, die eine Fluidverbindung oder eine elektrische Verbindung bilden. Die Kupplungsteile weisen hierzu jeweils einen Teilkörper mit einem darin eingelassenen Leitungszwischenabschnitt auf, der in einem Gehäuseteil drehbar gehalten und an den jeweils anderen Teilkörper anlegebar ist. In diesem angelegten Zustand bilden beide Teilkörper einen Stellkörper mit einem Kreisprofil aus, der hierdurch in seiner Gesamtheit innerhalb der beiden Gehäuseteile um 90 ° verdrehbar ist und dabei die Gehäuseteile gegeneinander verriegelt. Gleichzeitig wird dabei durch die Leitungszwischenabschnitte die betreffende Fluid- oder elektrische Leitung geschlossen.

US 2,397,576 zeigt eine schnell schließbare beziehungsweise trennbare Kupplung für die Verbindung zweier Rohrabschnitte. Auch hier sind zwei aneinander legbare Teilkörper vorgesehen, in die jeweils ein Leitungszwischenabschnitt eingelassen ist und die durch Verdrehen die Leitungsverbindung zwischen den Rohrabschnitten herstellen und diese dabei gleichzeitig gegeneinander verriegeln.

EP 1148286 A2, US 3,167,092 und US 2,712,454 beschreiben jeweils eine Kupplung mit einem zweiteiligen, kugelförmigen Stellkörper, der zum Öffnen und Schließen einer Leitung verdrehbar ist.

US 2,399,515 und US 2,334,875 zeigen jeweils einen zweiteiligen, zylindrischen Stellkörper, bei dem ein Leitungszwischenabschnitt in einen der jeweils zwei Teilkörper eingelassen ist.

WO 2006/131139 A1 beschreibt eine elektrische Kupplung, bei der zwei Anschlüsse über einen drehbaren Zwischenleiter elektrisch verbindbar sind.

US 2008/0286986 A1 beschreibt eine Kupplungsanordnung, die neben einer Saugrohrkupplung eine elektrische Verbindung mittels eines Stromkabels vorsieht.

DE 10 2004 033 567 A1 zeigt ein Verbindungssystem, bei dem sowohl zwei elektrische Verbindungen als auch zwei Fluidverbindungen über Steckanbindungen mit Hilfe hülsenfömiger Anschlüsse erfolgen.

In WO 2007/147510 A1 ist eine Manschette gezeigt, die zur formschlüssigen Verbindung zweier kragenförmiger Rohrabschlüsse aneinender dienen.

DE 40 30 381 beschreibt eine Kupplungsanordnung zur tropffreien Verbindung/Trennung zweier Leitungen für Flüssigkeiten. Hierzu weist die Kupplungsanordnung zwei Anschlussstücke mit jeweils einem Kanal auf, der mit der zugehörigen Leitung in Fließverbindung steht. Beide Anschlussstücke weisen an ihrem Ende ein in Fluchtrichtung des jeweiligen Kanals stehendes Kopfstück auf, an dem schräge Bohrungen ausgebildet sind, die von dem jeweiligen Kanal abzweigen, wobei die Kopfstücke aneinander festlegbar sind. Auf einem der beiden Anschlussstücke ist ferner eine Manschette gelagert, an deren Innenseite eine Ausnehmung eingelassen ist. Die Manschette ist dabei derart gegenüber den beiden Kopfstücken positionierbar, dass die Ausnehmung einen Bypass bildet, über den die schrägen Bohrungen beider Anschlusstücke miteinander verbunden werden können.

US 187982 A und US 3545490 A beschreiben jeweils eine Kupplungsanordnung mit zwei Kupplungshälften, in denen jeweils ein Kugelventil gelagert ist, wobei im verbundenen Zustand der Kupplungsanordnungen beide Kugelventile über einen gemeinsamen Mechanismus zwischen einer Fließ- und einer Sperrstellung verstellt werden können.

US 3423063 A zeigt eine Kupplungsanordnung mit einem einzelnen Kugelelement, das mittels einer Schiebehülse verdreht werden kann.

WO 2005/047052 A1 zeigt eine Kupplungsanordnung zur elektrischen Verbindung eines Fahrzeugsitzes mit einer Bodenkontakteinrichtung. Diese weist eine drehbare Kontaktbrücke auf, die beim Anbringen des Fahrzeugsitzes in eine Kontaktstellung dreht, in der sie Stromkontaktelemente des Fahrzeugsitzes elektrisch kontaktiert.

DE 203 06 852 U1 zeigt eine Kupplungsvorrichtung für flüssige oder gasförmige Medien mit zwei Kupplungshälften, die jeweils ein im Wesentlichen kugelförmiges Ventil aufweisen. Im verbundenen Zustand der Kupplungsvorrichtung können die beiden Ventile gegeneinander verdreht werden, um eine Fließstellung frei zu geben. Das Verdrehen beider Ventile erfolgt dabei gleichzeitig durch einen Mechanismus, der eine Drehbewegung eines jeweiligen Mantelelementes in eine translatorische Bewegung jeweils einer Hülse umwandelt, die mittels eines jeweiligen Getriebes wiederum in eine Rotationsbewegung einer Welle umgewandelt wird. Die beiden Kugelventile sind dabei mit jeweils einer dieser Wellen verbunden.

Nachteilig an dieser bekannten Kupplungsanordnung ist, dass diese relativ hohe Strömungsverluste erzeugt und nur für eine einzige Leitung verwendbar ist. Ferner ist sie aufgrund ihrer komplexen Konstruktionsweise relativ teuer und lediglich für relativ große Fließquerschnitte geeignet.

Die Aufgabe der Erfindung ist es, bei einer tropffreien Kupplungsanordnung die genannten Nachteile zu vermeiden und eine vielseitige Einsatzmöglichkeit bei relativ geringen Strömungsverlusten zu erzielen und die Herstellungskosten zu vermindern.

Diese Aufgabe wird durch eine Kupplungsanordnung mit den Merkmalen des Anspruchs 1 gelöst. Dabei weist der Stellkörper eine im Wesentlichen zylindrische Außenfläche auf und die Teilkörper sind im aneinander liegenden Zustand gemeinsam über ein translatorisch verstellbares Betätigungsmittel verstellbar, wobei zwischen dem Stellkörper und dem Betätigungsmittel ein Umlenkgetriebe vorgesehen ist, das eine translatorische Bewegung des Betätigungsmittels in eine Rotation des Stellkörpers umwandelt. Auf diese Weise ist es beispielsweise möglich, das Betätigungsmittel als Schieber auszuführen, der an einem Gehäuse, in dem einer der Leitungsabschnitte vorgesehen ist, verschiebbar gelagert ist und dabei an diesem eng anliegt. Hierdurch kann einerseits der Stellkörper in komfortabler Weise zwischen der Sperrstellung und der Fließstellung verstellt werden. Andererseits wird durch die enge Anlage des Betätigungsmittels an dem Gehäuse eine versehentliche Betätigung vermieden. Durch diese zweiteilige Ausführungsform des Stellkörpers ist es möglich in der Sperrstellung beide Leitungsabschnitte durch jeweils einen Teilkörper zu verschließen und voneinander zu trennen. Im verbundenen Zustand der Kupplungsanordnung können die Teilkörper, die hierbei aneinander liegen, gemeinsam betätigt werden. Dabei kann das Betätigungsmittel durch einen translatorisch verschiebbar gehaltenen Schiebeschalter gebildet sein.

In einer besonders vorteilhaften Ausführungsform ist der erste Teilkörper an einer zylindrisch geformten Innenfläche eines ersten Gehäuses der ersten Einheit und der zweite Teilkörper an einer zylindrisch geformten Innenfläche eines zweiten Gehäuses der zweiten Einheit geführt.

Zudem kann das Umlenkgetriebe hierbei durch eine Linearzahnung des Schiebeschalters gebildet sein, die mit einer Bogenzahnung des Stellkörpers kämmt, um eine lineare Bewegung des Schiebeschalters in eine Drehbewegung des Stellkörpers umzuwandeln.

In einer besonders vorteilhaften Ausführungsform stimmt dabei ein Zwischenquerschnitt des Leitungszwischenabschnittes hinsichtlich Form und Größe mit einem ersten Querschnitt des ersten Leitungsabschnittes und einem zweiten Querschnitt des zweiten Leitungsabschnittes überein, wodurch die Strömungsverluste minimiert werden.

Ferner ist es günstig, wenn der Leitungszwischenabschnitt in einer Durchgangsbohrung des Stellkörpers vorgesehen ist, wodurch der Leitungszwischenabschnitt eine minimale Erstreckung aufweisen kann.

Zudem ist es günstig, wenn die Verbindungsmittel am ersten Teilkörper Codierungsmittel aufweisen, die mit Codierungsgegenmitteln des zweiten Teilkörpers zusammen steckbar sind, die als Verbindungsgegenmittel fungieren. Derartige Codierungsmittel und Codierungsgegenmittel können dabei einerseits zur Kopplung der beiden Leitungsabschnitte dienen. Andererseits kann durch die Codierungsmittel, beispielsweise im Falle eines Systems mit einer Mehrzahl von Kupplungsanordnungen, sichergestellt werden, dass lediglich einander zugehörige Leitungsabschnitte miteinander verbunden werden können.

Vorteilhafterweise weisen die Verbindungsmittel und Verbindungsgegenmittel am Stellkörper Formschlussmittel und Formschlussgegenmittel auf. Über diese ist in der Fließstellung ein Formschluss zwischen beiden Leitungsabschnitten herstellbar. In der Sperrstellung kann der Formschluss dagegen wieder aufgehoben werden. Hierdurch ist es möglich, in Abhängigkeit der Stellung des Stellkörpers neben dem Umschalten zwischen der Sperrstellung und der Fließstellung gleichzeitig auch einen Formschluss zwischen der ersten und zweiten Einheit zu lösen oder herzustellen.

Ferner ist es günstig, wenn die Verbindungsmittel und Verbindungsgegenmittel separat zum Stellkörper Verriegelungsmittel und Verriegelungsgegenmittel aufweisen, mittels denen die Leitungsabschnitte unabhängig von der Stellung der Stelleinrichtung aneinander verriegelbar sind. Auf diese Weise können die erste Einheit und die zweite Einheit auch in der Sperrstellung sicher aneinander festgelegt werden.

In einer weiteren vorteilhaften Ausführungsform ist die im Wesentlichen zylindrische Außenfläche des Stellkörpers durch eine im Wesentlichen zylindrische Innenfläche der Steckerelemente geführt. Die zylindrische Form
des Stellkörpers und der Innenfläche der Steckerelemente ermöglichen dabei ein dichtes Aneinanderliegen beider Elemente.

Dabei ist es günstig, wenn der Stellkörper einen als Formschlussmittel fungierenden ringabschnittförmigen Rand aufweist, der im verbundenen Zustand der Kupplungsanordnung in Abhängigkeit der Drehposition des Stellkörpers einen Formschluss mit einem gehäuseseitigen Formschlussgegenmittel herstellt oder löst. Hierdurch kann mit dem Verstellen der Stelleinrichtung zwischen der Sperrstellung und der Fließstellung gleichzeitig ein stabiler Formschluss zwischen beiden Leitungsabschnitten über den Stellkörper hergestellt werden.

Alternativ hierzu ist es günstig, wenn der Stellkörper an einem der Teilkörper männliche Elemente und am jeweils anderen Teilkörper dazu komplementäre weibliche Elemente aufweist, die in der Sperrstellung entlang einer Montagerichtung zusammen steckbar sind und, insbesondere nach Verdrehen des Stellkörpers um 90°, in der Fließstellung entlang der Montagerichtung einen Formschluss erzeugen. Auf diese Weise kann ein vom Stellkörper selbst erzeugter lösbarer Formschluss mit besonders einfachen Mitteln umgesetzt werden.

Dabei ist es vorteilhaft, wenn wenigstens der Stellkörper aus zwei baugleichen Teilkörpern zusammensetzbar ist, wodurch dieser insgesamt einfacher und kostengünstiger herstellbar ist. Darüber hinaus ist es auch möglich, dass die Verbindungsmittel insgesamt und/oder die Bauteile der Kupplungsanordnung, die die Leitungsabschnitte bilden zumindest teilweise aus baugleichen Elementen hergestellt sind. Auf diese Weise können die Herstellungskosten der Kupplungsanordnung durch die zweifache Verwendung von mehreren Elementen deutlich reduziert werden.

Vorteilhafterweise bilden die Leitungsabschnitte und der Leitungszwischenabschnitt wenigstens eine tropffrei trennbare Fluidleitung, wodurch die Kupplungsanordnung beispielsweise in einem Kühlsystem eines elektronischen Moduls verwendbar ist.

Alternativ hierzu bilden die Leitungsabschnitte und der Leitungszwischenabschnitt wenigstens eine elektrische Leitung, wodurch die Kupplungsanordnung beispielsweise zur Herstellung einer Energieversorgung oder einer Kommunikations- oder Messverbindung verwendbar ist.

In einer besonders vorteilhaften Ausführungsform bildet die Kupplungsanordnung sowohl wenigstens eine elektrische Leitung als auch wenigstens eine Fluidleitung, die beide in Abhängigkeit von der Position des Stellkörpers verbunden beziehungsweise getrennt werden können. Hierdurch können beide Leitungen durch Betätigung des Stellkörpers gleichzeitig verbunden beziehungsweise getrennt werden. Dadurch kann die Kupplungsanordnung neben der Verwendung in reinen Fluidsystemen oder Elektrosystemen auch in kombinierten Systemen verwendet werden.

Zudem ist es günstig, wenn die Verbindungsmittel wenigstens eine elektrische Steckverbindung aufweisen, wodurch beim Verbinden der beiden Leitungsabschnitte zusätzlich eine elektrische Verbindung herstellbar ist, die zusätzlich zu der durch die Leitungsabschnitte und den Leitungszwischenabschnitt gebildeten Leitung vorgesehen ist und dadurch unabhängig von der Stellung des Stellkörpers betrieben werden kann.

In den Figuren ist eine beispielhafte Ausführungsform der Erfindung dargestellt. Es zeigen:
- Figur 1: eine perspektivische Ansicht eines verbindbaren Teils der erfindungsgemäßen Kupplungsanordnung im getrennten Zustand,
- Figur 2: eine perspektivische Ansicht des verbindbaren Teils der Kupplungsanordnung nach Fig. 1 im verbundenen Zustand,
- Figur 3: einen Schnitt durch den verbindbaren Teil der Kupplungsanordnung nach Fig. 2 auf Höhe von Leitungsabschnitten zur Herstellung einer Fluidverbindung in einer Sperrstellung,
- Figur 4: einen Schnitt durch den verbindbaren Teil der Kupplungsanordnung gemäß Fig. 3 in einer Fließstellung,
- Figur 5: eine perspektivische Ansicht einer Unterseite eines Gehäuses der Kupplungsanordnung,
- Figur 6: einen Schnitt durch eine elektrische Verbindung des verbindbaren Teils der Kupplungsanordnung nach Fig. 2,
- Figur 7: eine perspektivische Ansicht einer ersten alternative Ausführungsform des verbindbaren Teils der Kupplungsanordnung im getrennten Zustand,
- Figur 8: eine perspektivische Ansicht einer zweiten alternativen Ausführungsform des verbindbaren Teils der Kupplungsanordnung im getrennten Zustand,
- Figur 9: eine perspektivische Ansicht des verbindbaren Teils der Kupplungsanordnung nach Fig. 8 im verbundenen Zustand in Sperrstellung,
- Figur 10: eine perspektivische Ansicht des verbindbaren Teils der Kupplungsanordnung nach Fig. 9 in Fließstellung,
- Figur 11: eine perspektivische Ansicht auf ein erstes Steckerelement einer vierten alternativen Ausführungsform der Kupplungsanordnung im getrennten Zustand,
- Figur 12: eine perspektivische Ansicht auf ein zweites Steckerelement der Kupplungsanordnung nach Fig. 11,
- Figur 13: einen Schnitt durch die Kupplungsanordnung nach Fig. 11 und 12 im verbundenen Zustand in der Sperrstellung auf Höhe eines Umlenkgetriebes,
- Figur 14: einen Schnitt durch die Kupplungsanordnung gemäß Fig. 13 auf Höhe der Leitungsabschnitte,
- Figur 15: einen Schnitt durch die Kupplungsanordnung gemäß Fig. 13 auf Höhe eines elektrischen Leiters des Stellkörpers,
- Figur 16: einen Schnitt durch die Kupplungsanordnung gemäß Fig. 13 in der Fließstellung auf Höhe des Umlenkgetriebes,
- Figur 17: einen Schnitt durch die Kupplungsanordnung gemäß Fig. 16 auf Höhe der Leitungsabschnitte,
- Figur 18: einen Schnitt durch die Kupplungsanordnung gemäß Fig. 16 auf Höhe des elektrischen Leiters des Stellkörpers,

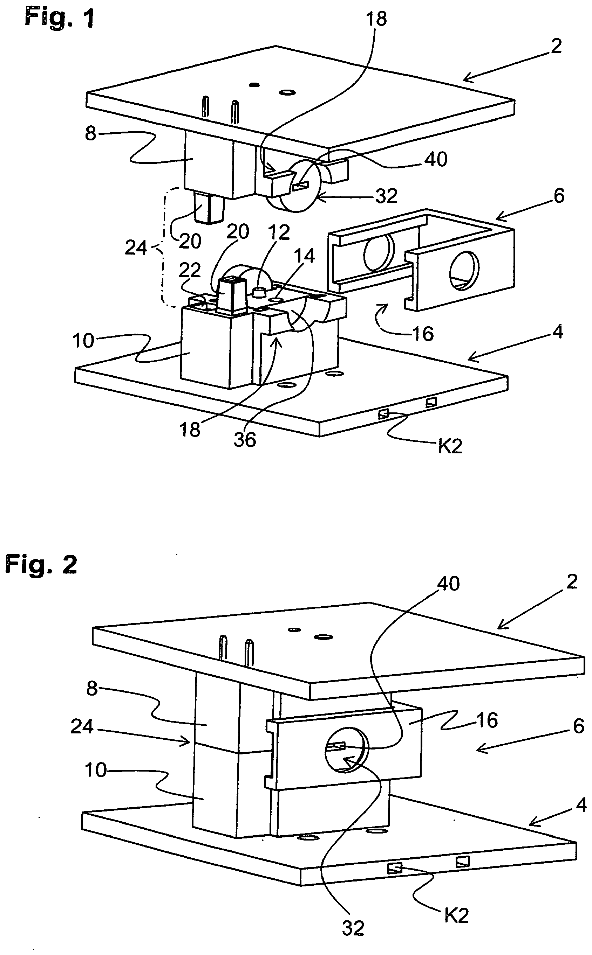

Die Figuren 1 bis 10 zeigen mehrere Ausführungsformen eines verbindbaren Teils einer Kupplungsanordnung, die zur Darstellung des gemeinsamen Grundprinzips der Funktionsweise dienen.

Fig. 1 und 2 zeigt eine erste Einheit 2 und eine zweite Einheit 4, die jeweils durch eine elektronische Leiterplatte gebildet sind. Die Einheiten 2 und 4 sind dabei über eine Kupplungsanordnung 6 miteinander verbindbar, die ein mit der ersten Einheit 2 verbundenes erstes Gehäuse 8 und ein mit der zweiten Einheit 4 verbundenes zweites Gehäuse 10 aufweist.

Die beiden Gehäuse 8, 10 können dabei über Verbindungsmittel und Verbindungsgegenmittel lösbar aneinander festgelegt werden. Diese weisen beispielsweise noppenförmige Codierungsmittel 12 und dazu komplementär geformte bohrungsförmige Codierungsgegenmittel 14, Verriegelungsmittel 16 und Verriegelungsgegenmittel 18 zur Herstellung eines lösbaren Formschlusses sowie elektrische Stecker 20 und entsprechende Steckeraufnahmen 22 zur Herstellung einer elektrischen Steckverbindung 24 auf. Sowohl die Codierungsmittel 12 und Codierungsgegenmittel 14 als auch die Stecker 20 und Steckeraufnahmen 22 sind dabei beidseitig, das heißt jeweils an beiden Gehäusen 8, 10 vorgesehen. Auf dieses Weise entsteht beim Verbinden beider Gehäuse 8, 10 sowohl eine paarweise elektrische Steckverbindung 24 als auch eine paarweise Codierungsverbindung.

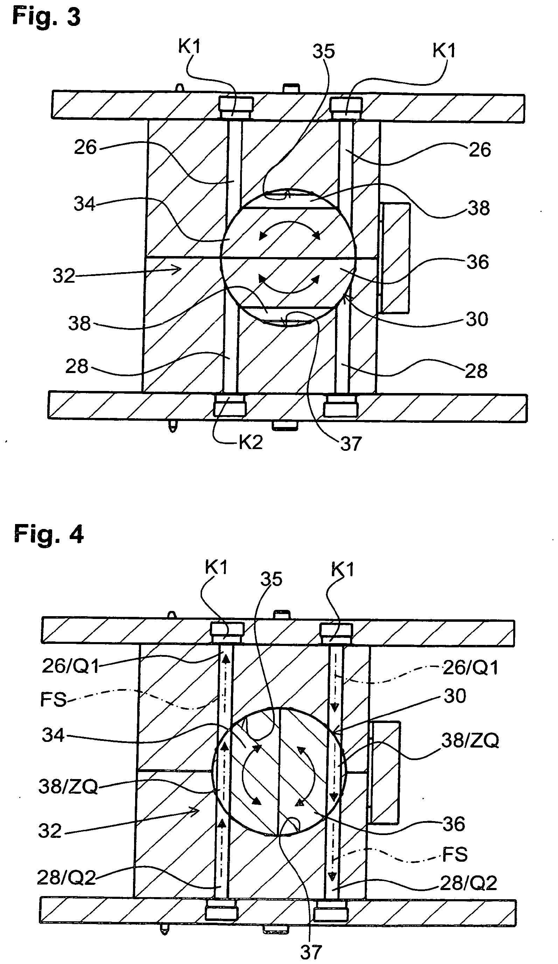

Die Kupplungsanordnung 6 dient dabei neben der Herstellung der elektrischen Steckverbindung 24 insbesondere zur Herstellung einer Fluidverbindung zwischen Kühlungskanälen K2 der zweiten Einheit 4 mit Kühlungskanälen K1 der ersten Einheit, wie in Fig. 3 und 4 dargestellt. Die Fluidverbindung ist dabei tropffrei herstellbar beziehungsweise trennbar, um mögliche Schäden an den Leiterplatten zu vermeiden.

Die Kupplungsanordnung 6 weist hierzu erste Leitungsabschnitte 26 im ersten Gehäuse 8 und zweite Leitungsabschnitte 28 im zweiten Gehäuse 10 auf, die unter Zwischenlage eines zylindrischen Stellkörpers 30 einer Stelleinrichtung 32 koaxial zueinander ausgerichtet sind. Der Stellkörper 30 ist dabei zwischen einer Sperrstellung gemäß Fig. 3, in der die Verbindung zwischen den ersten Leitungsabschnitten 26 und den zweiten Leitungsabschnitten 28 gesperrt ist, und einer Fließstellung, in der die Verbindung zwischen den ersten Leitungsabschnitten 26 und den zweiten Leitungsabschnitten 28 geöffnet ist, umschaltbar.

Zudem weist der Stellkörper, wie aus den Fig. 3 und 4 ferner zu entnehmen ist, einen ersten Teilkörper 34 auf, der an einer entsprechend zylindrisch geformten Innenfläche 35 des ersten Gehäuses 8 gelagert und geführt ist. Dieser liegt im dargestellten verbundenen Zustand an einem baugleichen zweiten Teilkörper 36 an, der an einer zylindrisch geformten Innenfläche 37 des zweiten Gehäuses 10 gelagert und geführt ist. Zur Herstellung einer Verbindung zwischen den Leitungsabschnitten 26, 28 ist in die Teilkörper 34, 36 jeweils ein Leitungszwischenabschnitt 38 als Durchgangsbohrung eingelassen.

In der Sperrstellung der Stelleinrichtung 32 (gemäß Fig. 3) beziehungsweise im getrennten Zustand der Kupplungsanordnung 6 (gemäß Fig. 1) sind die Leitungszwischenabschnitte 38 in eine zu den Leitungsabschnitten 26, 28 um 90° verdrehte Drehposition verbracht, in der sie von diesen getrennt sind. Die Leitungsabschnitte 26, 28 werden hierbei somit durch den jeweiligen Teilkörper 34, 36 verschlossen.

Nach dem Verbinden der Kupplungsanordnung 6 gemäß Fig. 2 kann die Stelleinrichtung 32 über einen Schlitz 40, der zur Aufnahme eines handelsüblichen Werkzeuges, wie beispielsweise eines Schraubenziehers (nicht dargestellt), dient, um 90° in die in Fig. 4 dargestellte Fließstellung verdreht werden.

Hierbei werden die aneinander liegenden und über die Codierungsmittel 12, 14 ineinander greifenden Teilkörper 34, 36 gleichzeitig in die Fließstellung verdreht, in der die Leitungszwischenabschnitte 38 koaxial zu den Leitungsabschnitten 26, 28 angeordnet sind und diese somit miteinander verbinden, um wie durch die Pfeile FS in Fig. 4 dargestellt, eine Fluidströmung des Kühlmittels zur ermöglichen.

Um hierbei mögliche Strömungsverluste in Folge des Stellkörpers 30 zu minimieren, weisen die Leitungszwischenabschnitte 38 Zwischenquerschnitte ZQ auf, die bezüglich Größe und Form identischen mit einem ersten Querschnitt Q1 der ersten Leitungsabschnitte 26 und einem zweiten Querschnitt Q2 der zweiten Leitungsabschnitte 28 sind.

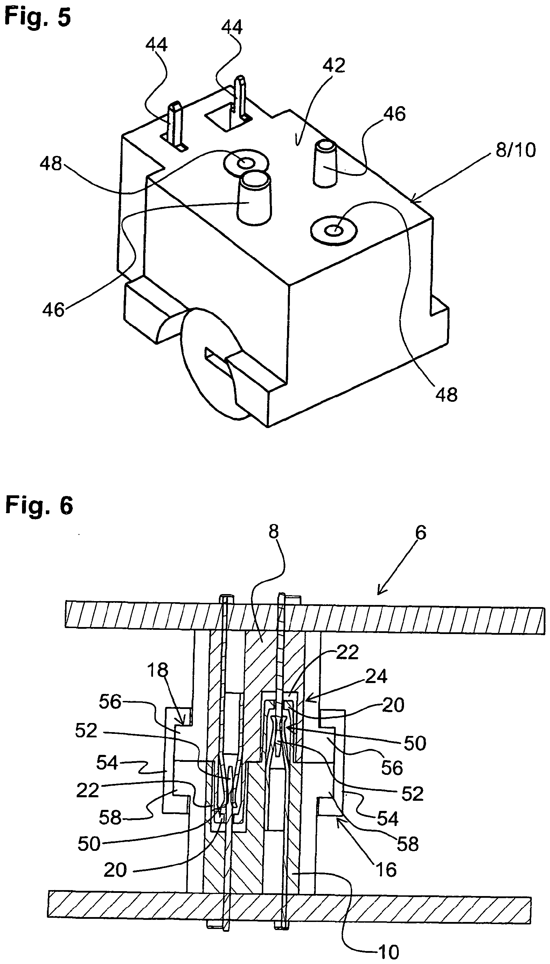

In Fig. 5 ist eine Unterseite 42 eines der Gehäuse 8, 10 dargestellt. An dieser sind zur steckbaren Verbindung mit der betreffenden Einheit 2, 4 elektrische Kontaktzungen 44, und Klemmkörper 46 vorgesehen, die an entsprechenden Klemmaufnahmen (nicht dargestellt) der Einheiten 2; 4 festlegbar sind. Ferner sind hieraus zwei Leitungsöffnungen 48 zu entnehmen, über die die Fluidverbindung mit den Kühlkanälen K1, K2 (siehe Fig. 2) herstellbar sind.

Fig. 6 zeigt einen Schnitt durch die elektrische Steckverbindung 24 im verbundenen Zustand der Kupplungsanordnung 6. Wie hieraus zu entnehmen ist, weisen die elektrischen Stecker 20 Kontaktklemmen 50 auf, die auf Kontaktzungen 52 aufgeschoben sind, die innerhalb der Steckeraufnahmen 22 angeordnet sind.

Wie aus Fig. 6 ferner zu entnehmen ist, sind die Verriegelungsmittel 16 durch einen Bügel mit zwei Armen 54 mit jeweils U-förmigem Profil gebildet. In dem dargestellten verriegelten Zustand hintergreift jeder der Arme 54 jeweils einen ersten Absatz 56 des ersten Gehäuses 8 und einen zweiten Absatz 58 des zweiten Gehäuses 10 und legt diese dadurch formschlüssig aneinander fest.

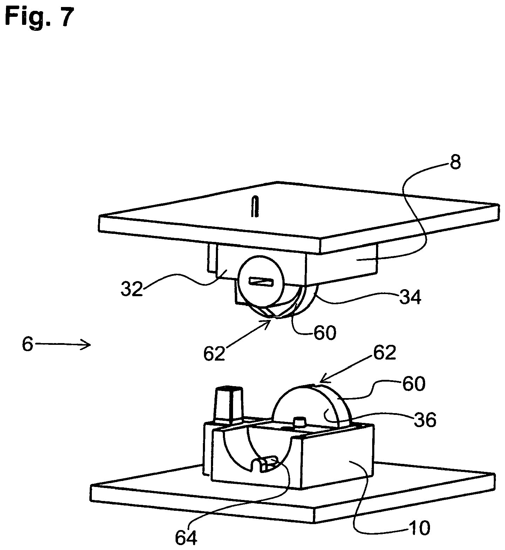

Fig 7 zeigt eine alternative Ausführungsform der Kupplungsanordnung 6, bei der an den Teilkörpern 34, 36 jeweils ein Formschlussmittel in Form eines ringabschnittförmigen Randes 60 ausgebildet ist. Dieser Rand 60 weist dabei eine Unterbrechung 62 auf, an der ein durch ein Hintergreifelement 64 gebildetes Formschlussgegenmittel beim Verbinden beider Teilkörper 34, 36 den Rand 60 passieren kann. Das Hintergreifelement 64 ist dabei am jeweiligen Gehäuse 8, 10 ausgebildet. Wenn im verbundenen Zustand nun die Stelleinrichtung 32 von der dargestellten Sperrstellung in die Fließstellung verdreht wird, wird gleichzeitig der Rand 60 gegenüber dem jeweiligen Hintergreifelement 64 verdreht und erzeugt dadurch eine formschlüssige Verbindung zwischen beiden Gehäusen 8, 10.

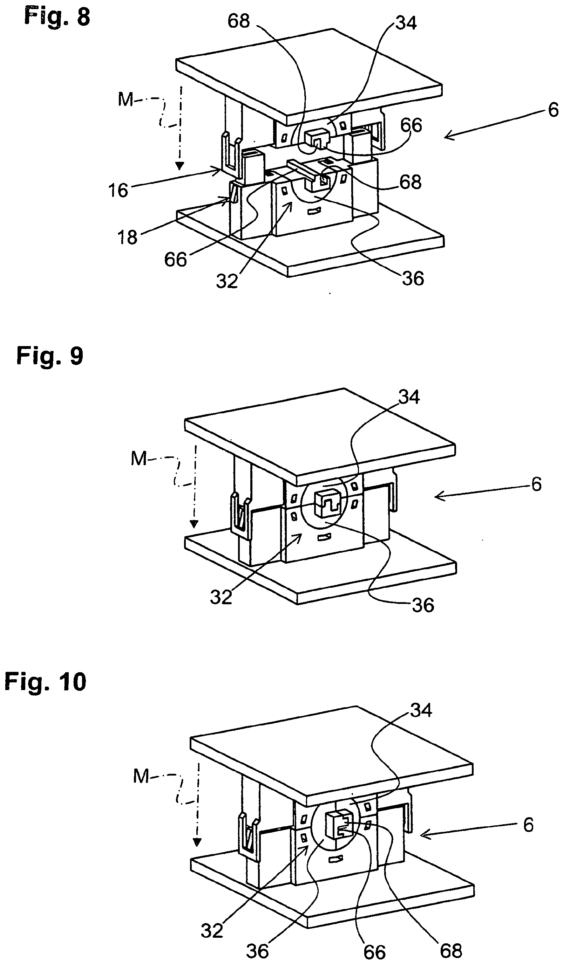

Die Fig. 8 bis 10 zeigen eine weitere alternative Ausführungsform der Kupplungsanordnung 6. Bei dieser sind an den Teilkörpern 34, 36 des Stellkörpers 30 jeweils Formschlussmittel in Form von männlichen Elementen 66 und Formschlussgegenmittel in Form von komplementären weiblichen Elementen 68 ausgeformt, die beim Verbinden der Kupplungsanordnung 6 entlang einer Montagerichtung M ineinander gesteckt werden können.

Beim Verdrehen der Stelleinrichtung 32 aus dieser in Fig. 9 dargestellten Sperrstellung in die in Fig. 10 dargestellte Fließstellung erzeugen die männlichen Elemente 66 zusammen mit den weiblichen Elementen 68 einen Formschluss, der die Teilkörper 34, 36 in Montagerichtung M aneinander festlegt.

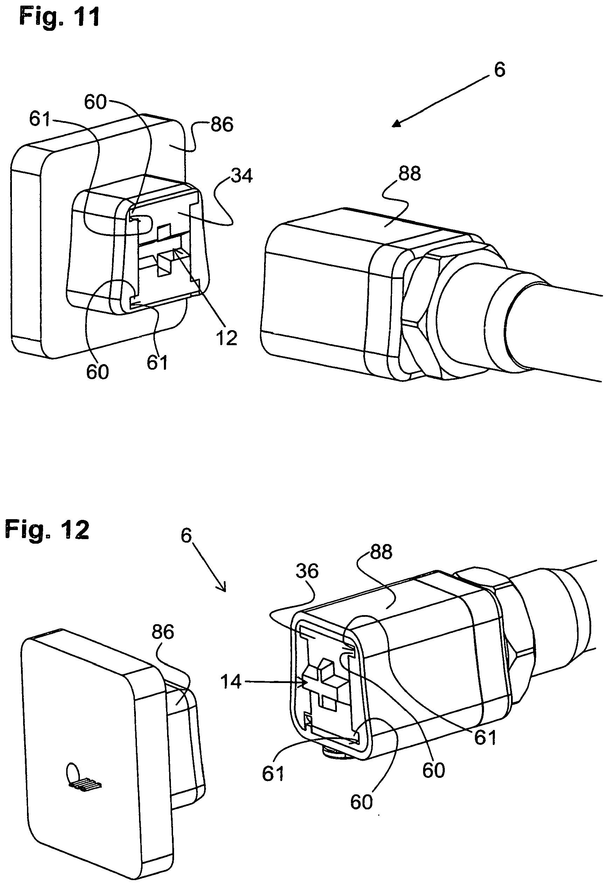

Die Fig. 11 und 12 zeigen eine Ausführungsform der Kupplungsanordnung 6, die nach dem gleichen Grundprinzip wie die vorangehend beschriebenen Ausführungsformen funktioniert.

Hierbei sind die beiden Teilkörper 34, 36 des Stellkörpers 30 in ein erstes Steckerelement 86 und ein zweites Steckerelement 88 einer Steckerverbindung integriert, die sowohl zu einer reinen Fluidverbindung, einer reinen elektrischen Verbindung oder einer kombinierten Fluid- und Elektroverbindung verwendet werden kann.

Wie aus den Fig. 11 und 12 zu entnehmen ist, bilden die Teilkörper 34, 36 auch hier Codierungsmittel 12 beziehungsweise Codierungsgegenmittel 14 aus. Ferner bilden beide Teilkörper 34, 36 kreisabschnittförmige Ränder 60 aus, die in entsprechenden Ausnehmungen 61 der Steckerelemente 86, 88 geführt sind.

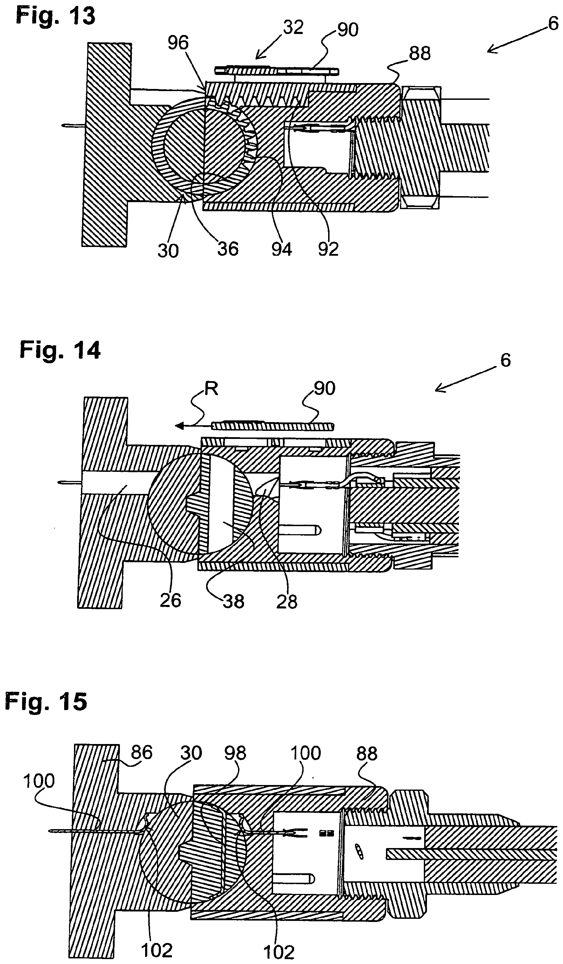

Bei der hier gezeigten Kupplungsanordnung 6 weist die Stelleinrichtung 32, wie insbesondere aus Fig. 13 zu entnehmen ist, einen Schiebeschalter 90 als Betätigungsmittel auf, der translatorisch verschiebbar am zweiten Steckerelement 88 gehalten ist. Der Schiebeschalter bildet dabei eine Linearzahnung 92 aus, die mit einer Bogenzahnung 94 kämmt, die am zweiten Teilkörper 36 vorgesehen ist.

Die Linearzahnung 92 und die Bogenzahnung 94 bilden auf diese Weise ein Umlenkgetriebe 96 mittels dem eine lineare Bewegung des Schiebeschalters 90 in eine Drehbewegung des Stellkörpers 30 umgewandelt werden kann.

In der insbesondere in Fig. 14 gezeigten Sperrstellung des Schiebeschalters 90 im verbundenen Zustand der Kupplungsanordnung 6 steht der Leitungszwischenabschnitt 38 senkrecht zu den beiden Leitungsabschnitten 26, 28 und unterbricht dadurch die Fluidverbindung, entsprechend Fig. 3 der ersten Ausführungsform.

Wie aus Fig. 15 zu entnehmen ist, kann in dem Stellkörper 30 neben dem Leitungszwischenabschnitt 38 zur Herstellung der Fluidverbindung (gem Fig. 14) zusätzlich ein elektrischer Leiter 98 zur gleichzeitigen Herstellung beziehungsweise Trennung einer elektrischen Verbindung vorgesehen sein. Dabei ist der elektrische Leiter 98 in der dargestellten Sperrstellung zunächst von zwei Elektroleitungsabschnitten 100 beabstandet, die in den Steckerelementen 86, 88 vorgesehen sind und mit jeweils einem Schleifkontakt 102 an dem Stellkörper 30 anliegen.

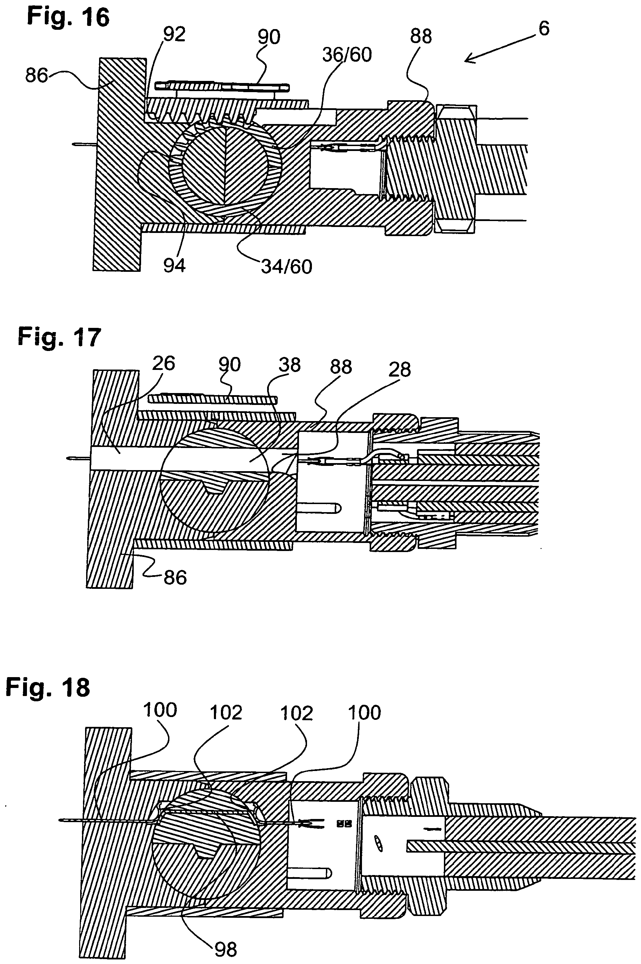

Durch Verschieben des Schiebeschalters 90 in Richtung R wird nun der über die Bogenzahnung 94 mit der Linearzahnung 92 kämmende zweite Teilkörper 36 zusammen mit dem ersten Teilkörper 34 um 90° verdreht, wie in Fig. 16 dargestellt.

Wie aus Fig. 16 ferner zu entnehmen ist, erstrecken sich die Ränder 60 in der Fließstellung jeweils über beide Steckerelemente 86, 88 und bilden somit aufgrund ihrer Kreisbogenform einen Formschluss, durch den die Steckerelemente 86, 88 in der Fließstellung sicher aneinander festgelegt sind.

Beim Verdrehen des ersten Teilkörpers 34 wird der Leitungszwischenabschnitt 38 koaxial zu den Leitungsabschnitten 26, 28 ausgerichtet. Die Kupplungsanordnung 6 ist somit in die Fließstellung verbracht, in der eine Fluidverbindung über den Stellkörper 30 hergestellt ist, wie in Fig. 17 dargestellt.

Gleichzeitig werden in dieser Fließstellung nun auch die beiden Schleifkontakte 102 der Elektroleitungsabschnitte 100 über den elektrischen Leiter 98 verbunden, so dass parallel zur Fluidverbindung gleichzeitig auch eine elektrische Verbindung hergestellt ist, die beispielsweise zur Stromversorgung oder zur Signal- oder Datenübertragung genutzt werden kann.

Entsprechend können auch alle vorangehend beschriebenen Ausführungsformen der Kupplungsanordnung 6 zusätzlich oder alternativ zu der in den Figuren dargestellten Fluidverbindung auch eine elektrische Verbindung aufweisen, die über den Stellkörper 30 verbunden beziehungsweise unterbrochen werden kann.

## Patentansprüche

1. Kupplungsanordnung (6) zur lösbaren Verbindung eines an einer ersten Einheit (2) vorgesehenen ersten Leitungsabschnittes (26) mit einem an einer zweiten Einheit (4) vorgesehenen zweiten Leitungsabschnitt (28), mit an der ersten Einheit (2) anbringbaren Verbindungsmitteln, mit an der zweiten Einheit (4) anbringbaren Verbindungsgegenmitteln, die an den Verbindungsmitteln festlegbar sind und mit einer zwischen dem ersten Leitungsabschnitt (26) und dem zweiten Leitungsabschnitt (28) positionierbaren Stelleinrichtung (32), die zwischen einer Sperrstellung, in der die Verbindung zwischen dem ersten Leitungsabschnitt (26) und dem zweiten Leitungsabschnitt (28) gesperrt ist, und einer Fließstellung, in der die Verbindung zwischen dem ersten Leitungsabschnitt (26) und dem zweiten Leitungsabschnitt (28) geöffnet ist, umschaltbar ist,
wobei die Stelleinrichtung (32) einen zwischen der Sperrstellung und der Fließstellung drehbar gelagerten Stellkörper (30) aufweist, der in einem Abstand zwischen dem ersten Leitungsabschnitt (26) und dem zweiten Leitungsabschnitt (28) positionierbar ist und in den ein Leitungszwischenabschnitt (38) vollständig eingelassen ist, über den der erste Leitungsabschnitt (26) mit dem zweiten Leitungsabschnitt (28) verbindbar ist
und der Stellkörper (30) einen ersten Teilkörper (34), der an einem dem ersten Leitungsabschnitt (26) zugeordneten ersten Steckerelement (86) geführt ist, und einen zweiten Teilkörper (36), der an einem dem zweiten Leitungsabschnitt (28) zugeordneten zweiten Steckerelement (88) geführt ist, aufweist, die aneinander anlegbar sind,
**dadurch gekennzeichnet, dass** der Stellkörper (30) eine im Wesentlichen zylindrische Außenfläche aufweist und durch eine im Wesentlichen zylindrische Innenfläche (35, 37) der Steckerelemente (86, 88) geführt ist,
wobei die Teilkörper (34, 36) im aneinander liegenden Zustand gemeinsam über ein translatorisch verstellbares Betätigungsmittel der Stelleinrichtung (32) verstellbar sind
und die Stelleinrichtung (32) zwischen dem Stellkörper (30) und dem Betätigungsmittel ein Umlenkgetriebe (96) ausbildet.

2. Kupplungsanordnung nach Anspruch 1, **dadurch gekennzeichnet, dass** der erste Teilkörper (34) an einer zylindrisch geformten Innenfläche (35) eines ersten Gehäuses (8) der ersten Einheit (2) und der zweite Teilkörper (36) an einer zylindrisch geformten Innenfläche (37) eines zweiten Gehäuses (10) der zweiten Einheit (4) geführt ist.

3. Kupplungsanordnung nach Anspruch 1 oder 2, **dadurch gekennzeichnet, dass** das Betätigungsmittel durch einen translatorisch verschiebbar gehaltenen Schiebeschalter (90) gebildet ist.

4. Kupplungsanordnung nach Anspruch 3, **dadurch gekennzeichnet, dass** das Umlenkgetriebe (96) durch eine Linearzahnung (92) des Schiebeschalters (90) gebildet ist, die mit einer Bogenzahnung (94) des Stellkörpers (30) kämmt.

5. Kupplungsanordnung nach einem der Ansprüche 1 bis 4, **dadurch gekennzeichnet, dass** ein Zwischenquerschnitt (ZQ) des Leitungszwischenabschnittes (38) mit einem ersten Querschnitt (Q1) des ersten Leitungsabschnittes (26) und einem zweiten Querschnitt (Q2) des zweiten Leitungsabschnittes (28) übereinstimmt.

6. Kupplungsanordnung nach einem der Ansprüche 1 bis 5, **dadurch gekennzeichnet, dass** der Leitungszwischenabschnitt (38) in einer Durchgangsbohrung des Stellkörpers (30) vorgesehen ist.

7. Kupplungsanordnung nach einem der Ansprüche 2 bis 6, **dadurch gekennzeichnet, dass** die Verbindungsmittel und Verbindungsgegenmittel am ersten Teilkörper (34) Codierungsmittel (12) aufweisen, die mit Codierungsgegenmitteln (14) des zweiten Teilkörpers (36) zusammen steckbar sind.

8. Kupplungsanordnung nach einem der Ansprüche 1 bis 7, **dadurch gekennzeichnet, dass** die Verbindungsmittel und Verbindungsgegenmittel am Stellkörper (30) Formschlussmittel und Formschlussgegenmittel aufweisen, über die in der Fließstellung ein Formschluss zwischen beiden Leitungsabschnitten (26, 28) herstellbar ist, wobei der Formschluss in der Sperrstellung aufhebbar ist.

9. Kupplungsanordnung nach einem der Ansprüche 1 bis 8, **dadurch gekennzeichnet, dass** die Verbindungsmittel und Verbindungsgegenmittel Verriegelungsmittel (16) und Verriegelungsgegenmittel (18) aufweisen, mittels denen die Leitungsabschnitte (26, 28) unabhängig von der Stellung der Stelleinrichtung (32) aneinander verriegelbar sind.

10. Kupplungsanordnung nach einem der Ansprüche 1 bis 9, **dadurch gekennzeichnet, dass** der Stellkörper (30) einen als Formschlussmittel fungierenden ringabschnittförmigen Rand (60) aufweist, der in Abhängigkeit der Drehposition des Stellkörpers (30) eine formschlüssige Verbindung mit einem gehäuseseitigen Formschlussgegenmittel bildet.

11. Kupplungsanordnung nach einem der Ansprüche 2 bis 10, **dadurch gekennzeichnet, dass** der Stellkörper (30) an einem der Teilkörper (34, 36) männliche Elemente (66) und am jeweils anderen Teilkörper (34, 36) dazu komplementäre weibliche Elemente (68) aufweist, die in der Sperrstellung entlang einer Montagerichtung (M) zusammen steckbar sind und in der Fließstellung entlang der Montagerichtung (M) einen Formschluss erzeugen.

12. Kupplungsanordnung nach einem der Ansprüche 2 bis 11, **dadurch gekennzeichnet, dass** wenigstens die Teilkörper (34, 36) baugleich ausgebildet sind.

13. Kupplungsanordnung nach einem der Ansprüche 1 bis 12, **dadurch gekennzeichnet, dass** die Leitungsabschnitte (26, 28) und der Leitungszwischenabschnitt (38) wenigstens eine Fluidleitung bilden.

14. Kupplungsanordnung nach einem der Ansprüche 1 bis 13, **dadurch gekennzeichnet, dass** die Leitungsabschnitte (26, 28) und der Leitungszwischenabschnitt (38) wenigstens eine elektrische Leitung bilden.

15. Kupplungsanordnung nach Anspruch 13 oder 14, **dadurch gekennzeichnet, dass** die Kupplungsanordnung (6) sowohl wenigstens eine elektrische Leitung als auch wenigstens eine Fluidleitung aufweist, die beide über den Stellkörper (30) verbindbar sind.

## Claims

1. Coupling assembly (6) for the releasable connection of a first line section (26) provided at a first unit (2), with a second line section (28) provided at a second unit (4), with connection means which can be provided at the first unit (2) and connection counter-means provided at the second unit (4) which can be secured to the connection means, and with a setting device (32) which can be positioned between the first line section (26) and the second line section (28), and which can be switched between a blocking setting, in which the connection between the first line section (26) and the second line section (28) Is blocked, and a flow setting, in which the connection between the first line section (26) and the second line section (28) is opened,
wherein the setting device (32) comprises a setting body (30), mounted such as to rotate between the blocking setting and the flow setting, which can be positioned at a distance interval between the first line section (26) and the second line section (28) and in which a line intermediate section (38) is fully introduced, by means of which the first line section (26) can be connected to the second line section (28),
and the setting body (30) comprises a first part body (34), which is guided at a first plug element (86) arranged at the first line section (26), and a second part body (36) which is guided at a second plug element (88) arranged at the second line section (28), which can be brought in contact with one another,
**characterised In that** the setting body (30) exhibits an essentially cylindrical outer surface, and is guided by an essentially cylindrical inner surface (35, 37) of the plug elements (86, 88), wherein the part bodies (34, 36), in the state in which they are in contact, can be adjusted in position jointly by means of a translatory adjustable actuation means of the setting device (32),
and the setting device (32) forms an angle gear (96) between the setting body (30) and the actuation means.

2. Coupling assembly according to claim 1, **characterised in that** the first part body (34) is guided on a cylindrically shaped inner surface (35) of a first housing (8) of the first unit (2) and the second part body (36) is guided on a cylindrically shaped inner surface (37) of a second housing (10) of the second unit (4).

3. Coupling assembly according to claim 1 or 2, **characterised in that** the actuation means are formed by a slide switch (90) which is held such as to be translatory adjustable.

4. Coupling assembly according to claim 3, **characterized in that** the angle gear (96) is formed by a linear tooth arrangement (92) of the slide switch (90), which meshes with a curved tooth arrangement (94) of the setting body (30).

5. Coupling assembly according to any one of claims 1 to 4, **characterised in that** an intermediate cross-section (ZQ) of the line intermediate section (38) accords with a first cross-section (Q1) of the first line section (26) and a second cross-section (Q2) of the second line section (28).

6. Coupling assembly according to any one of claims 1 to 5, **characterised in that** the line intermediate section (38) is provided in a passage opening of the setting body (30).

7. Coupling assembly according to any one of claims 2 to 6, **characterized in that** the connection means and connection counter-means at the first part body (34) comprise coding means (12), which can be plugged together with coding counter-means (14) of the second part body (36).

8. Coupling assembly according to any one of claims 1 to 7, **characterised in that** the connection means and connection counter-means at the adjustment body (30) comprise interlocking means and interlocking counter-means, by means of which, in the flow direction, an interlocking engagement can be established between both line sections (26, 28), wherein the interlocking engagement can be suspended in the locking position.

9. Coupling assembly according to any one of claims 1 to 8, **characterised in that** the connection means and connection counter-means comprise locking means (16) and locking counter-means (18), by means of which the line sections (26, 28) can be locked to one another regardless of the setting of the setting device (32).

10. Coupling assembly according to any one of claims 1 to 9, **characterised in that** the setting body (30) comprises an edge (60) in the shape of a ring section, functioning as interlocking means, which, depending on the rotational position of the setting body (30) forms a positive fit interlocking connection with interlocking counter-means on the housing side.

11. Coupling assembly according to any one of claims 2 to 10, **characterised in that** the setting body (30) comprises male elements (66) at one of the part bodies (34, 36) and complementary female elements (68) at the respective other part body (34, 36), which in the blocking setting can be plugged together along an assembly direction (M), and in the flow setting form an interlock along the assembly direction (M).

12. Coupling assembly according to any one of claims 2 to 11, **characterised in that** at least the part bodies (34, 36) are formed as structurally identical.

13. Coupling assembly according to any one of claims 1 to 12, **characterised in that** the line sections (26, 28) and the line intermediate section (38) form at least one fluid line.

14. Coupling assembly according to any one of claims 1 to 13, **characterised in that** the line sections (26, 28) and the line intermediate section (38) form at least one electrical line.

15. Coupling assembly according to claim 13 or 14, **characterised in that** the coupling assembly (6) comprises both at least one electrical line as well as at least one fluid line, both of which can be connected by way of the setting body (30).

## Revendications

1. Agencement de couplage (6) pour raccorder de manière amovible un premier segment de ligne (26) prévu sur une première unité (2) avec un deuxième segment de ligne (28) prévu sur une deuxième unité (4), comprenant des moyens de raccordement pouvant être montés sur la première unité (2), des moyens conjugués de raccordement pouvant être montés sur la deuxième unité (4) et pouvant être fixés aux moyens de raccordement, et un dispositif de commutation (32) pouvant être positionné entre le premier segment de ligne (26) et le deuxième segment de ligne (28) et commutable entre une position de barrage, dans laquelle le raccordement est barré entre le premier segment de ligne (26) et le deuxième segment de ligne (28), et une position d'écoulement, dans laquelle le raccordement est passant entre le premier segment de ligne (26) et le deuxième segment de ligne (28),
le dispositif de commutation (32) présentant un corps de commutation (30) monté en rotation entre la position de barrage et la position d'écoulement, qui peut être positionné dans un intervalle entre le premier segment de ligne (26) et le deuxième segment de ligne (28) et dans lequel est complètement inséré un segment Intermédiaire de ligne (38), par l'intermédiaire duquel le premier segment de ligne (26) est raccordable avec le deuxième segment de ligne (28)
et le corps de commutation (30) présentant un premier corps partiel (34), qui est guidé sur un premier élément d'enfichage (86) associé au premier segment de ligne (26) et un deuxième corps partiel (36), qui est guidé sur un deuxième élément d'enfichage (88) associé au deuxième segment de ligne (28), les deux corps partiels (34, 36) pouvant être appliqués l'un sur l'autre,
**caractérisé en ce que** le corps de commutation (30) présente une surface extérieure sensiblement cylindrique et est guidé par une surface intérieure (35, 37) sensiblement cylindrique des éléments d'enfichage (86, 88),
dans un état disposé l'un contre l'autre les corps partiels (34, 36) sont réglables ensemble par l'intermédiaire d'un moyen d'actionnement du dispositif de commutation (32), réglable en translation
et le dispositif de commutation (32) forme un mécanisme de renvoi (96) entre le corps de commutation (30) et le moyen d'actionnement.

2. Agencement de couplage selon la revendication 1, **caractérisé en ce que** le premier corps partiel (34) est guidé sur une surface intérieure (35) de forme cylindrique d'un premier boîtier (8) de la première unité (2) et le deuxième corps partiel (36) est guidé sur une surface intérieure (37) de forme cylindrique d'un deuxième boîtier (10) de la deuxième unité (4).

3. Agencement de couplage selon la revendication 1 ou 2, **caractérisé en ce que** le moyen d'actionnement est formé par un commutateur à coulisse (90) maintenu de manière déplaçable en translation.

4. Agencement de couplage selon la revendication 3, **caractérisé en ce que** le mécanisme de renvoi (96) est formé par une crémaillère (92) du commutateur à coulisse (90), qui engrène avec un secteur denté courbe (94) du corps de commutation (30).

5. Agencement de couplage selon l'une des revendications 1 à 4, **caractérisé en ce qu'**une section transversale intermédiaire (ZQ) du segment intermédiaire de ligne (38) concorde avec une première section transversale (Q1) du premier segment de ligne (26) et avec une deuxième section transversale (Q2) du deuxième segment de ligne (28).

6. Agencement de couplage selon l'une des revendications 1 à 5, **caractérisé en ce que** le segment intermédiaire de ligne (38) est prévu dans un alésage traversant du corps de commutation (30).

7. Agencement de couplage selon l'une des revendications 2 à 6, **caractérisé en ce que** les moyens de raccordement et les moyens conjugués de raccordement présentent sur le premier corps partiel (34) des moyens de codage (12) qui peuvent s'enficher avec des moyens conjugués de codage (14) du deuxième corps partiel (36).

8. Agencement de couplage selon l'une des revendications 1 à 7, **caractérisé en ce que** les moyens de raccordement et les moyens conjugués de raccordement présentent sur le corps de commutation (30) des moyens d'assemblage par complémentarité de forme et des moyens d'assemblage conjugués par complémentarité de forme par l'intermédiaire desquels une complémentarité de forme peut être créée entre les deux segments de ligne (26, 28) dans la position d'écoulement, la complémentarité de forme pouvant être levée dans la position de barrage.

9. Agencement de couplage selon l'une des revendications 1 à 8, **caractérisé en ce que** les moyens de raccordement et les moyens conjugués de raccordement présentent des moyens de verrouillage (16) et des moyens de verrouillage conjugués (18), au moyen desquels les segments de lignes (26, 28) sont verrouillables l'un sur l'autre indépendamment de la position du dispositif de commutation (32).

10. Agencement de couplage selon l'une des revendications 1 à 9, **caractérisé en ce que** le corps de commutation (30) présente un collet (60) en forme de segment d'anneau faisant fonction de moyen d'assemblage par complémentarité de forme, le collet formant avec un moyen d'assemblage conjugué par complémentarité de forme côté boîtier un raccordement par complémentarité de forme en fonction de la position angulaire du corps de commutation (30).

11. Agencement de couplage selon l'une des revendications 2 à 10, **caractérisé en ce que** le corps de commutation (30) présente des éléments mâles (66) sur l'un des corps partiels (34, 36) et des éléments femelles complémentaires (68) sur respectivement l'autre corps partiel (34, 36), lesdits éléments étant enfichables ensemble dans la position de barrage selon une direction de montage (M) et réalisant dans la position d'écoulement une liaison par complémentarité de forme selon la direction de montage (M).

12. Agencement de couplage selon l'une des revendications 2 à 11, **caractérisé en ce qu'**au moins les corps partiels (34, 36) sont configurés constructivement identiques.

13. Agencement de couplage selon l'une des revendications 1 à 12, **caractérisé en ce que** les segments de ligne (26, 28) et le segment intermédiaire de ligne (38), forment au moins une conduite de fluide.

14. Agencement de couplage selon l'une des revendications 1 à 13, **caractérisé en ce que** les segments de ligne (26, 28) et le segment intermédiaire de ligne (38), forment au moins une ligne électrique.

15. Agencement de couplage selon la revendication 13 ou 14, **caractérisé en ce que** l'agencement de couplage (6) comporte aussi bien au moins une ligne électrique qu'au moins une conduite de fluide, qui sont tous deux raccordables par l'intermédiaire du corps de commutation (30).
